**Europäisches Patentamt**

**European Patent Office**

**Office européen des brevets**

(19)

(11) Publication number: **0 137 915**
**B1**

(12) # EUROPEAN PATENT SPECIFICATION

(45) Date of publication of patent specification: **30.09.87**

(51) Int. Cl.⁴: **B 60 T 13/22**

(21) Application number: **84107603.7**

(22) Date of filing: **30.06.84**

(54) **Fail-safe brake.**

(30) Priority: **01.09.83 SE 8304730**

(43) Date of publication of application:
**24.04.85 Bulletin 85/17**

(45) Publication of the grant of the patent:
**30.09.87 Bulletin 87/40**

(84) Designated Contracting States:
**DE FR IT**

(56) References cited:
**DE-A-2 341 953**
**US-A-3 976 333**
**US-A-4 317 331**

(73) Proprietor: **DYNAPAC AKTIEBOLAG**
**Box 1103**
**S- 171 22 Solna (SE)**

(72) Inventor: **Bueno, Alfredo**
**Rua Gaivota, 150 APT 03**
**BR-04522 Sao Paulo (BR)**

(74) Representative: **Falck, Magnus**
**Dynapac Maskin AB Box 1103**
**S-171 22 Solna (SE)**

Courier Press, Leamington Spa, England.

## Description

The present invention relates to a brake system for hydraulically powered vehicles as set out in the preamble of claim 1, and is particularly concerned with a fail-safe brake for hydraulically powered road rollers.

A fail-safe brake on vehicles of the type concerned is understood to mean a brake system intended in the event of a fault in the normal vehicle brake or "road brake" to reduce the speed of the vehicle or to stop it altogether. For this purpose, the fail-safe brake system should have an operating means completely separated from the road brake, which means should be easy for the driver to reach and operate. Further requirements on the fail-safe brake system are that it must be operationally reliable and that the risks of faults being incurred in the fail-safe brake system are virtually eliminated.

In the US—A—4 317 331, which corresponds to the preamble of claim 1, there is disclosed a brake system for hydraulically powered vehicles the main object of which is to provide a brake which can be applied for safety purposes even when the vehicle is being towed with its engine being not operated. The system comprises a hydraulic valve of a double way connecting type one way of which being incorporated in the brake system and the other via a further valve in the propellant circuit of the vehicle. The system, however, does not utilise a single valve electrically actuated for controlling the brake and the propellant circuit system at the same time. Furthermore, it is supposed to work with the drive engine being not operated.

A hydraulic valve electrically actuated is known from the DE—A—2 341 953 the purpose of which is to control the fail-safe brake. The valve, however, is not used on a vehicle whose driven wheels are driven by hydraulic power supplied by a hydraulic circuit associated with the valve.

The fail-safe brake according to the present invention works on the same principle as a conventional dead-man's grip, i.e. it is intended to enter into function automatically as soon as the vehicle's hydraulic system ceases to function. This is essential in that the road brake normally used on hydraulically powered vehicles is actuated hydraulically and is conditional on the hydraulic system being in order. The system exploits the oil pressure build up by the vehicle drive motor in the hydraulic system with the aid of the hydraulic pump which compresses one or a plurality of mechanical springs disposed in a hydraulic spring brake chamber incorporated in the hydraulic system. The energy stored in the springs is used to stop the vehicle if necessary.

At full oil pressure the springs are compressed and the brake incorporated in the fail-safe brake system is released. If the oil pressure in the brake chamber disappears or becomes insufficient to overcome the spring force the energy stored in the springs is used to apply the brake. Such a change in the oil pressure may be caused either by leakage in the oil system or by the driver applying the fail-safe brake.

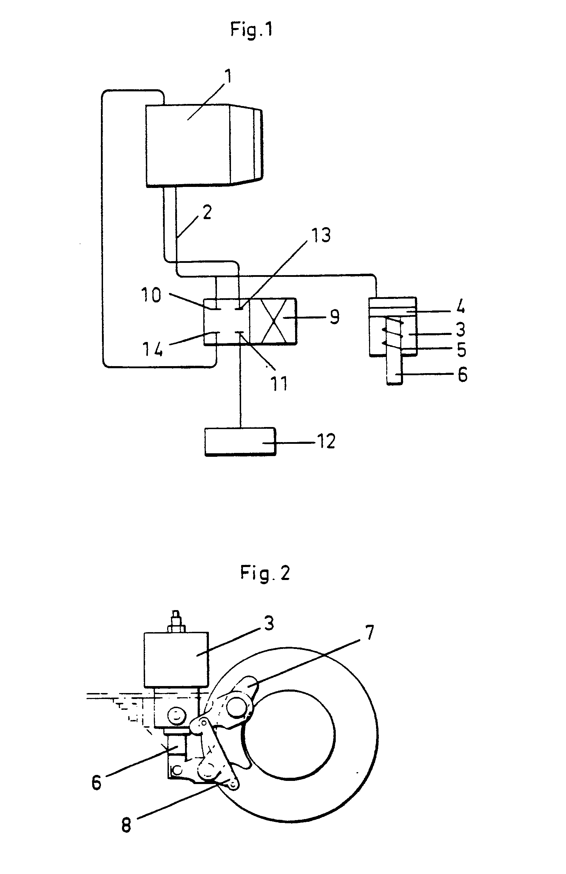

In the following, the invention will be described in more detail and with reference to the accompanying drawing, wherein Fig. 1 is a schematic representation of the hydraulic circuit for the fail-safe-brake system and Fig. 2 an example of a practical embodiment of a brake device connected to said circuit.

The fail-safe brake system according to the present invention incorporates a hydraulic pump 1 which provides a pressurized oil chamber 3 with hydraulic oil via line 2 and also supplies oil to a hydraulic vehicle drive motor via a propellant circuit. Disposed within chamber 3 is a piston 4 which, when oil is pumped into chamber 3, is displaced within the cylinder against the force of a spring 5.

The piston rod 6 belonging to piston 4 communicates with a linkage system 8 interacting with the fail-safe brake 7. At full oil pressure, piston 4 is inserted so far into chamber 3 that the brake 7 is completely released. If the oil pressure is reduced or completely lost, for example in consequence of a ruptured oil line or some other form of leakage in the hydraulic system, piston 4 is forced back by spring 5, whereupon brake 7 is applied and the vehicle stops.

In order for the vehicle to be braked by application of the fail-safe brake also under other circumstances than when the hydraulic system ceases to function, the fail-safe brake system incorporates a valve 9 which in the illustrated example is electrically actuated and has four normally isolated parts 10, 11, 13, 14. When braking is required, the electrically actuated valve 9 is actuated and then takes up a position connecting port 10 with port 11. The oil in chamber 3 is then evacuated to tank 12 and brake 7 is applied by the spring force released in brake chamber 3.

At the same time as communication is afforded between ports 10 and 11, valve ports 13 and 14 also become connected. By this means, the propellant circuit is "shorted" with a reduction of the propellant torque in consequence and the vehicle stops without the driver having to put the forward and reverse lever to the neutral position. Since the vehicle drive motor is not disengaged, it maintains its running speed and thus enables other hydraulic systems, for example the steering system, to function and thus the steerability of the roller to be maintained throughout the entire braking distance.

Through this invention, a fail-safe brake system for hydraulically powered road rollers that is completely mechanical and acts directly on the braking members of the roller has been realised. Consequently, the system will be safer in comparison with brakes that are actuated for instance hydraulically, where there is always a risk of oil leakage. When the fail-safe brake system according to the invention is actuated it is true that the hydraulic propellant force in the propellant circuit is disengaged but the steerability of the roller is not lost, which is of importance in that the roller can thus be steered as it is
brought to a halt.

**Claim**

A brake system for hydraulically powered
vehicles comprising:

a tank (12) for supplying hydraulic fluid;

a hydraulic cylinder (3);

a pump (1) for pumping hydraulic fluid from the
tank (12) under pressure into the hydraulic
cylinder (3) and to a hydraulic vehicle drive
motor;

a first hydraulic circuit including a first pair of
valve ports (10, 11) for connecting the cylinder (3)
directly to the tank (12);

spring means (5) arranged in the hydraulic
cylinder (3);

a piston (4) in operative contact with said spring
means (5) and slidably engaging the cylinder (3)
whereby fluid under pressure in said cylinder
compresses said spring means (5);

brake means (7, 8) being operatively connected
to a piston rod (6) of the piston (4) whereby the
spring means (5) applies the brake when allowed
to expand;

a second hydraulic circuit including a second
pair of valve ports (13, 14) for short-circuiting the
pump (1) thereby returning the fluid directly to the
latter;

characterzed by an electrically actuated valve (9)
switchable from a deenergized to an energized
condition, the valve (9) when actuated and with the
vehicle drive motor still engaged providing communication at the first pair of valve ports (10, 11)
for diverting the fluid away from the cylinder (3)
and into the tank (12) thereby causing the brake to
be moved into the braking condition and at the
same time providing communication at the second
pair of valve ports (13, 14) for short-circuiting the
pump (1) thereby disengaging the propellant force
and creating an additional braking effect, due to
the still-engaged drive motor.

**Patentanspruch**

Bremssystem für hydraulisch betriebene Fahrzeuge mit einem Behälter (12) zur Zuführung
hydraulischer Flüssigkeit, einem Druckzylinder
(3), einer Pumpe (1) zur Beförderung hydraulischer Flüssigkeit von dem Behälter (12) unter
Druck in den Druckzylinder (3) und zu einem
hydraulischen Antriebsmotor des Fahrzeugs,
einem ersten hydraulischen Schaltkreis, der ein
erstes Paar von Ventilöffnungen (11, 12) zur direkten Verbindung des Druckzylinders (3) mit dem
Behälter (12) aufweist, einer an dem Druckzylinder (3) angeordneten Federvorrichtung (5), einem
Kolben (4), der mit der Federvorrichtung (5)
zusammenwirkt und gleitend in den Druckzylinder (3) eingreift, wobei die unter Druck stehende
Flüssigkeit im Druckzylinder die Federvorrichtung
(5) komprimiert, einer mit einer Kolbenstange (6)
des Kolbens (4) zusammenwirkenden Bremsvorrichtung (7, 8), wobei die Federvorrichtung (5) die
Bremse bedient, wenn sie expandieren kann, und einem zweiten hydraulischen Schaltkreis, der ein
zweites Paar von Ventilöffnungen (13, 14) aufweist, um die Pumpe (1) kurz zu schalten, wobei
die Flüssigkeit direkt zu dieser zurückgeführt wird,
gekennzeichnet durch ein elektrisch betriebenes
Ventil (9), das von einem entregten in einen
erregten Zustand schaltbar ist, wobei das Ventil
(9), wenn es bei noch angekuppeltem Antriebsmotor erregt wird, eine Verbindung zwischen
dem ersten Paar von Ventilöffnungen (10, 11)
herstellt, um die Flüssigkeit vom Druckzylinder (3)
abzuziehen und in den Behälter (12) zu leiten,
wodurch eine Bewegung der Bremse in ihre
Bremsstellung bewirkt wird, und gleichzeitig eine
Verbindung zwischen dem zweiten Paar von Ventilöffnungen (13, 14) herstellt, um die Pumpe (1)
kurzzuschließen, wobei die Vortriebskraft abgeschaltet und eine zusätzliche Bremswirkung aufgrund des noch angekuppelten Antriebsmotors
erzeugt wird.

**Revendication**

Un système de freinage pour véhicules à entraînement hydraulique comprenant:

un réservoir (12) pour fournir du fluide
hydraulique;

un vérin hydraulique (3);

une pompe (1) pour amener par pompage du
fluide hydraulique en provenance du réservoir
(12) sous pression dans le vérin hydraulique (3) et
vers un moteur hydraulique d'entraînement du
véhicule;

un premier circuit hydraulique comprenant une
première paire de lumières (10, 11) pour relier le
vérin (3) directement au réservoir (12);

des moyens à ressort (5) prévus dans le vérin
hydraulique (3);

un piston (4) en contact de fonctionnement
avec lesdits moyens à ressort (5) et venant en
prise de manière coulissante avec le vérin (3), de
sorte que du fluide sous pression contenu dans
ledit vérin comprime lesdits moyens à ressort (5);

des moyens de freinage (7, 8) étant reliés à une
tige de piston (6) du piston (4) de sorte que les
moyens à ressort (5) appliquant le frein lorsqu'ils
sont amenés à se détendre;

un second circuit hydraulique comprenant une
seconde paire de lumières (13, 14) afin de court-
circuiter la pompe (1) en ramenant ainsi directement le fluide vers cette dernière;

caractérisé par une vanne à actionnement
hydraulique (9) pouvant être commutée d'un état
désexcité à un état excité, la vanne 9, lorsqu'elle
est actionnée avec le moteur d'entraînement du
véhicule toujours prise, assurant une communication au niveau de la première paire de lumière (10,
11) pour détourner le fluide en l'écartant du vérin
(3) et en le dirigeant vers le réservoir (12) afin
d'amener le frein à se déplacer dans les conditions de freinage et d'assurer en même temps une
communication au niveau de la seconde paire de
lumières (13, 14) pour court-circuiter la pompe (1)
en libérant ainsi la force propulsive et en créant
un effet de freinage supplémentaire dû au moteur
d'entraînement toujours en prise.

Fig.1

Fig. 2